# EUROPÄISCHE PATENTANMELDUNG

(11) **EP 1 890 228 A2**
(43) Veröffentlichungstag der Anmeldung: **20.02.2008**
(21) Anmeldenummer: 07015690.6
(22) Anmeldetag: 09.08.2007
(51) Int. Cl.: G06F 9/44, G06F 21/00

(54) **Automatisches Erzeugen einer Anwendung**

(30) Priorität: 18.08.2006 DE 102006038876
(71) Anmelder: Giesecke & Devrient GmbH, 81677 München (DE)
(72) Erfinder: Stix, Gerhard, 81827 München (DE); Spitz, Stephan, Dr., 81247 München (DE)

(57) **Zusammenfassung**

Eine Entwicklungsvorrichtung (1) zum automatischem Erzeugen eines auf einer Zielplattform (13) von portablen Datenträgern (10) lauffähigen Anwendungscodes (19,20) einer Anwendung umfasst einen Modellmodifikator (5), der ein an die Zielplattform (13) angepasstes plattformabhängiges Anwendungsmodell (18) der Anwendung basierend auf einem plattformunabhängigen Anwendungsmodell (17) erzeugt und dabei das plattformabhängige Anwendungsmodell (18) um auf den Typ der Zielplattform (13) abgestimmte Plattformtypparameter (14a, 14b) erweitert. Anschließend erzeugt ein Codegenerator (7) den Anwendungscode (19) basierend auf dem plattformabhängigen Anwendungsmodell (18). Zur genauen Anpassung und Optimierung des Anwendungsmodells (17) an die technischen Merkmale der Zielplattform (13) umfasst die Entwicklungsvorrichtung (1) weiterhin einen Codemodifikator (7), der den erzeugten Anwendungscode (19) abhängig von Plattformparametern (15a,15b) optimiert, die auf die Zielplattform (13) abgestimmt sind.

## Beschreibung

Die vorliegende Erfindung betrifft ein Verfahren zum Erzeugen eines auf einer Zielplattform von portablen Datenträgern lauffähigen Anwendungscodes und/oder von Anwendungsdaten einer Anwendung sowie eine derartige Vorrichtung.

Die Entwicklung von Anwendungen für Computersysteme mit proprietären oder spezialisierten Hardware/Software-Plattformen durch Anwendungsentwickler kann einen wichtigen Beitrag zum kommerziellen Erfolg derartiger Computersysteme leisten. Dies gilt insbesondere für tragbare Datenträger, die mit einer eigenen Rechenleistung ausgestattet sind, wie z. B. Chipkarten, Smart Cards, sichere Multimediakarten, Mobilfunkkarten oder dergleichen, da diese aufgrund der auf ihnen gespeicherten vertraulichen und/oder personenbezogenen Daten häufig besonderen Sicherheitsanforderungen auch bei der Anwendungsentwicklung genügen müssen. Bei der Anwendungsentwicklung für derartige portable Datenträger ist einerseits eine weitgehende Transparenz der genauen Plattformkonfiguration und technischer Merkmale und Details gegenüber dem Anwendungsentwicker erforderlich und andererseits ist eine möglichst einfache sichere Programmierschnittstelle wünschenswert. Zusätzlich ist eine möglichst plattformunabhängig Anwendungsentwicklung erwünscht, damit der Entwicklungsaufwand für spezialisierte Zielplattformen begrenzt werden kann.

Ein in diesem Zusammenhang bekannter Entwicklungsansatz ist der MDA-Ansatz ("Model Driven Architecture"), der eine Anwendungsentwicklung auf einer abstrakten und plattformunabhängigen Modellebene vorsieht und durch einen mehrstufigen Umsetzungs- und Übersetzungsprozess in einem auf der betreffenden Plattform lauffähigen plattformabhängigen Anwendungscode resultiert. Dabei wird aus einem vorliegenden Entwurf der späteren Anwendung nacheinander ein plattformunabhängiges Anwendungsmodell (PIM; "Platform Indenpendent Model"), ein plattformabhängiges Anwendungsmodell (PSM; "Platförm Specific Model") und schließlich der ausführbare Anwendungscode erzeugt, indem eine sukzessive Anpassung an die Zielplattform erfolgt. Auf Modellebene (PIM, PSM) werden hierbei Modellierungssprachen eingesetzt, wie z. B. UML ("Unified Modelling Language").

Die DE 100 08632 B4 beschreibt ein Verfahren zur Unterstützung von Programmierern bei der Entwicklung eines Quellcodeprogramms. Die Programmierung kann hierbei entweder auf einer leichter zu bedienenden graphischen Benutzerebene in Form von Flussdiagrammen und graphischen Ablaufsymbolen erfolgen, oder auf einer technischen Programmierebene in Form einer direkten Entwicklung des Quellcodeprogramms. Mittels einer skriptsprachlichen Schnittstelle kann ein Flussdiagramm in den entsprechenden Quellcode umgesetzt werden. Dieses System ist jedoch nicht für die möglichst plattformunabhängige Entwicklung von lauffähigen Anwendungen für spezialisierte Zielplattformen geeignet.

Demzufolge ist die Aufgabe der vorliegenden Erfindung, eine komfortable plattformunabhängige Anwendungsentwicklung bei gleichzeitiger möglichst guter Anpassung des Anwendungscodes und/ oder der Anwendungsdaten an die zugrundeliegende Plattform zu ermöglichen.

Diese Aufgabe wird erfindungsgemäß durch ein Verfahren sowie eine Vorrichtung mit den Merkmalen der unabhängigen Ansprüche gelöst. Die davon abhängigen Ansprüche beschreiben vorteilhafte Ausgestaltungen und Weiterbildungen der Erfindung.

Ein Anwendungscode und/ oder Anwendungsdaten einer Anwendung für eine bestimme Zielplattform werden durch einen mehrstufigen Prozess aus einem diese Anwendung repräsentierenden plattformunabhängigen Anwendungsmodell automatisch erzeugt. Eine Vorrichtung zum Erzeugen eines auf der Zielplattform lauffähigen Anwendungscodes und/oder Anwendungsdaten aus dem plattformunabhängigen Anwendungsmodell umfasst zu diesem Zweck einen Modellmodifikator, der aus dem plattformunabhängigen Anwendungsmodell ein plattformspezifisches Anwendungsmodell erzeugt, einen Anwendungsgenerator, der aus dem plattformabhängigen Anwendungsmodell einen Anwendungscode und/ oder Anwendungsdaten erzeugt, sowie einen Codemodifikator, der den erzeugten Anwendungscode und/oder die erzeugten Anwendungsdaten optimiert, indem der Anwendungscode möglichst umfassend auf die technischen Eigenschaften und Merkmale der Zielplattform abgestimmt wird. Diese Optimierung des Anwendungscodes wird von dem (Code- oder auch) Plattformmodifikator auf der Basis von Plattformparametern durchgeführt, die plattformabhängige technische Merkmale der Zielplattform festlegen oder wiedergeben, die bei einer Optimierung des Anwendungscodes in diesen integriert werden. Darüberhinaus basiert die Erzeugung des plattformspezifischen Anwendungsmodells aus dem plattformunabhängigen Anwendungsmodell auf in das Anwendungsmodell integrierten Plattformtypparametern, die technische Merkmale des Typs der Zielplattform wiedergeben.

Mit der Transformatiönskaskade von verschiedenen Repräsentationen der zu entwickelnden Anwendung wird ausgehend von dem vollkommen plattformunabhängigen Anwendungsmodell sukzessive eine immer genauere Anpassung an die konkrete Zielplattform erreicht, bis schließlich mit dem optimierten Anwendungscode eine im Hinblick auf Effizienz und Systemperformanz hinreichend an die Zielplattform angepasste, lauffähige Repräsentation der Anwendung vorliegt. Vorzugsweise wird jeder dieser Umsetzungs- bzw. Transformationsschritte durch den Modellmodifikator, Codegenerator und Codemodifikator automatisch, also ohne eine Intervention des Anwendungsentwicklers durchgerührt. Der Anwendungsentwickler wird dadurch in die Lage versetzt, eine Anwendung auf der abstrakten Modellebene als plattformunabhängiges Anwendungsmodell zu entwickeln, wodurch er einerseits frei von technischen Einschränkungen der Zielplattform ist und andererseits die Zielplattform aufgrund der hohen Abstraktionsebene in ihrer Integrität geschützt bleibt, da der Anwendungsentwickler hierfür keine technischen Details der Zielplattform kennen muss.

Die notwendige Adaption der Anwendung an die Zielplattform wird dabei erreicht, indem einerseits bei der Umsetzung des plattformunabhängigen Anwendungsmodells in das plattformabhängige Anwendungsmodell durch den Modellmodifikator und andererseits bei der Optimierung des Anwendungscodes durch den Codemodifikator plattformspezifische Information in die jeweilige Repräsentation der Anwendung eingebracht wird. Hierbei liegen die von dem Modellmodifikator eingebrachten Plattformtypparameter und die von dem Codemodifikator eingebrachten Plattformparameter wiederum auf verschiedenen Abstraktionsstufen, da die Plattformtypparameter solche Plattforminformationen festlegen oder wiedergeben, die auf der abstrakten Modellebene verwendet werden können, während die Plattformparameter konkrete technische Details der Zielplattform bzw. sogar des betreffenden Datenträgers festlegen oder wiedergeben, die direkt auf der konkreten Anwendungscodeebene einzubringen sind. Die Plattformtypparameter und die Plattformparameter werden von dem Modellmodifikator bzw. dem Codemodifikator aus einem geeigneten Speicher der Vorrichtung bei Bedarf entnommen und verwendet.

Im Folgenden wird mit dem Begriff Parameter, z.B. Plattformtypparameter oder Plattformparameter, also nicht in erster Linie der jeweilige Parameterwert bezeichnet, sondern insbesondere die nachfolgend beschriebenen plattformspezifischen technischen Inhalte und Merkmale, für die ein Parameterwert steht und die in das Anwendungsmodell bzw. den Anwendungscode eingebunden werden, um einen jeweils höheren Adaptionsgrad des Anwendungsmodells bzw. des Anwendungscodes an die Plattform herzustellen.

Vorzugsweise wird der abstrakten Ebene des plattformunabhängigen Anwendungsmodells eine weitere noch abstraktere Entwicklungsebene vorgeschaltet, mit der eine Vielzahl von Metamodellen in einem Speicher der Vorrichtung bereitgestellt werden, die jeweils einen bestimmten Anwendungstyp von denjenigen Anwendungen repräsentieren, die für die betreffende Zielplattform geeignet sind. Diese Metamodelle bilden eine weitere Abstraktionsstufe bei der Anwendungsentwicklung, die dem Anwendungsentwickler einen weitergehenden Entwicklungskomfort sowie eine noch umfassendere Abstraktion von den plattformspezifischen Merkmalen der Zielplattform bzw. eines Datenträgers bereitstellt.

Ein Metamodell beschreibt vorzugsweise diejenigen Eigenschaften und Funktionen einer Anwendung, die sämtliche Anwendungen des betreffenden Anwendungstyps gemeinsam haben. Aus einem solchen Metamodell kann der Anwendungsentwickler beispielsweise mit Hilfe einer graphischen Benutzerschnittstelle das plattformunabhängige Anwendungsmodell entwerfen, indem dem ausgewählten Metamodell konkrete Funktionen und Eigenschaften der betreffenden Anwendung, wie z.B. Schnittstellen zu anderen Funktionen, hinzugefügt werden. Derartige Metamodelle können beispielsweise bereitgestellt werden für Anwendungstypen wie z.B. SIM-Toolkit-Anwendungeri bei Mobilfunkkarten, Börsenanwendungen oder kryptographische Anwendungen, um dem Anwendungsentwickler bereits eine Grundstruktur zur Entwicklung der Anwendung bereitzustellen.

Die von dem Modellmodifikator zur Erzeugung des plattformspezifischen Anwendungsmodells verwendeten Plattformtypparameter umfassen vorzugsweise Sicherheitsparameter und/ oder Schnittstellenparameter, sie sind hierauf aber nicht beschränkt. Die Schnittstellenparameter legen die Programmierschnittstelle (API; "Application Programming Interface") des Betriebssystems der Zielplattform fest, um bei der Erzeugung des plattformspezifischen Anwendungsmodells diese Programmierschnittstellen des Betriebssystems einzubinden und auf diese bei der Erzeugung des Anwendungscodes durch den Codegenerator korrekt zugreifen zu können. Insbesondere können die Schnittstellenparameter auch den von der Zielplattform für eine Anwendung zur Verfügung gestellten Speicherplatz, eine bestimmte Laufzeitumgebung, wie z. B. eine Java Card-Laufzeitumgebung (JCRE), eine .NET-Laufzeitumgebung CLR ("Common Language Runtime") oder eine sonstige virtuelle Maschine, Programm- und Systembibliotheken, Kommunikationsschnittstellen sowie weitere Leistungsmerkmale der Zielplattform wiedergeben.

Darüber hinaus können die Plattformtypparameter auch Sicherheitsparameter umfassen, die eine bestimmte Sicherheitspolitik bzw. vorgegebene Sicherheitseigenschaften der Zielplattform betreffen, die bereits auf Modellebene in das plattformspezifische Anwendungsmodell integriert werden können. Derartige Sicherheitsparameter sind beispielsweise bestimmte Authentisierungsverfahren, die von einem sich an dem Datenträger authentisierenden Benutzer durchlaufen werden müssen, sowie eine vorgesehene Rechteverwaltung der Zielplattform, die die Zugriffsprivilegien von verschiedenen Benutzergruppen auf die Daten und Ressourcen des Datenträgers wiedergeben.

Bei den von dem Codemodifikator auf der Ebene des Anwendungscodes eingebrachten Plattformparametern handelt es sich vorzugsweise um Konfigurationsparameter und/oder Personalisierungsparameter, sie sind hierauf jedoch nicht beschränkt. Die Konfigurationsparameter betreffen insbesondere Informationen über die Implementierung des Betriebssystems und dessen Details, so dass die Konfigurationsparameter allgemein die für den Anwendungsentwickler nicht sichtbaren bzw. nicht änderbaren Bestandteile des Betriebssystems berücksichtigen. Derartige Implementierungsdetails sind in der Regel direkt abhängig von dem Typ des Betriebssystems, z. B. Java Card 2.0, Java Card 2.1, Multos, oder ein natives oder ein Multitasking-System. Des Weiteren können die Konfigurationsparameter aber auch die Prioritätsverwaltung eines Multitasking-Systems, eine Ressourcenverwaltung oder die Speicheraufteilung des Datenträgers sowie ein Performance-Optimierung wiedergeben bzw. festlegen. Des Weiteren können die Personalisierungsparameter neben den für eine Personalisierung des Datenträgers auf einen bestimmten Benutzer benötigten persönlichen Daten, wie z. B. kryptographische Schlüssel, Namen und Adressen und dergleichen, auch Angaben zu der bei der Initialisierung eines portablen Datenträgers, wie z.B. einer Chipkarte, aufgespielten Datenstruktur umfassen.

Die meisten der oben genannten Parameter sind durch den Typ der Zielplattform bzw. des Datenträgers vorgegeben und können in einer Parameterdatenbank hinterlegt werden, die vorzugsweise Teil der Vorrichtung ist bzw. auf welche die Vorrichtung zugreifen kann. Hierbei werden die benötigten Plattformtypparameter und/oder Plattformparameter jeweils zusammen mit Daten, Inhalten oder Verfahrensschritten, die die durch den jeweiligen Parameter bezeichneten technischen Merkmale repräsentieren, von dem Codemodifikator oder dem Modellmodifikator aus der Parameterdatenbank ausgelesen und entsprechend zur technischen Konkretisierung der Anwendung eingesetzt.

Die Parameter sind in der Regel durch die Zielplattform technisch bedingt oder werden von dem Hersteller oder Herausgeber des Datenträgers vorgegeben.

Beispielsweise können die Schnittstellenparameter und/ oder die Konfigurationsparameter durch den Typ der Zielplattform bzw. die Zielplattform selbst vorgegeben sein, während die Sicherheitsparameter durch den Hersteller des Datenträgers im Hinblick auf seine technische Ausstattung oder seinen üblichen Einsatzbereich individuell festgelegt werden können. Darüber hinaus ist es auch möglich, dass bestimmte Parameter auch erst durch den Anwendungsentwickler festgelegt werden, wie z.B: die Personalisierungsparameter. Zur Spezifikation von Parametern, die erst durch den Anwendungsentwickler festgelegt werden, kann die Vorrichtung eine geeignete Eingabeeinrichtung umfassen.

Darüber hinaus kann die Vorrichtung eine Leseeinrichtung umfassen, um auf den portablen Datenträger, für den die Anwendung entwickelt wird, zuzugreifen und dessen Zielplattform zu ermitteln. Die Zielplattform umfasst dabei insbesondere Informationen über das Betriebssystem des Datenträgers und/oder über die Hardware des Datenträgers selbst, z.B. Informationen über den Prozessor, Kommunikationsschnittstellen, Leistungsmerkmale und dergleichen. Im Zusammenhang mit der vorliegenden Erfindung geeignete Betriebssysteme sind insbesondere Java Card, Multos, .NET, aber auch native Betriebssysteme sowie Multitasking-Betriebssysteme, wobei jedes dieser Betriebssysteme wiederum zumindest ein Anwendungscodeformat kennt, das entweder unmittelbar ausführbar oder zumindest durch einen Interpreter oder eine virtuelle Maschine unmittelbar interpretierbar sind. Als portable Datenträger, auf denen einen solche Zielplattform aufgesetzt sein kann, kommen insbesondere Chipkarten, Smart Cards, Mobilfunkkarten, sichere Multimediakarten und dergleichen in Frage.

Die plattformunabhängigen und plattformabhängigen Anwendungsmodelle repräsentieren in der Regel keine herkömmlichen ausführbaren oder übersetzbaren Programmiersprachen, sondern werden in speziellen Modellierungs- oder Beschreibungssprachen entwickelt, wie z. B. UML oder XML ("Extended Markup Language"). Der Codegenerator setzt dann eine derartige UML- bzw. XML-Repräsentation in einen Anwendungscode um, der zumindest mittelbar von dem Datenträger ausführbar bzw. interpretierbar ist. Hierbei gibt es die Möglichkeit, dass der Codegenerator aus dem plattformspezifischen Anwendungsmodell direkt einen unmittelbar ausführbaren Anwendungscode oder ein Quellcodeformat erzeugt, das vor einer Ausführung noch durch einen Übersetzer übersetzt werden muss. Als unmittelbar ausführbare Codeformate kommen hierbei insbesondere Java-Servlets/ Applets, Java-Bytecode, ein sonstiger nativer Code, Multos-MEL-Code ("Multos Executable Language"), NET-CIL-Code ("Common Intermediate Language") oder dergleichen infrage. Je nachdem, ob der Codegenerator einen ausführbaren oder einen zu übersetzenden Anwendungscode erzeugt, führt der Codemodifikator entweder eine Optimierung des unmittelbar ausführbaren oder interpretierbaren Anwendungscodes durch oder übersetzt den Quellcode in einen unmittelbar ausführbaren oder interpretierbaren Anwendungscode.

Weitere Merkmale und Vorteile der Erfindung ergeben sich aus der folgenden Beschreibung verschiedener erfindungsgemäßer Ausführungsbeispiele sowie weiterer Ausführungsalternativen im Zusammenhang mit den begleitenden Zeichnungen. Darin zeigen:
- Fig. 1: einen Verfahrensablauf der sukzessiven Entwicklung eines lauffähigen Anwendungscodes; und
- Fig. 2: eine entsprechende Vorrichtung, die das Verfahren der Fig. 1 realisiert.

Aus vielfältigen Gründen besteht ein Bedarf an Methoden zur automatischen Programmcodeerzeugung. Diese Gründe umfassen z.B. den Wunsch, eine einfache und intuitive Softwareentwicklung zu ermöglichen, indem auf einer eher intuitiven, graphisch ausgestalteten Programmierebene Anwendungen in Form von Flussdiagramme oder Symbolfolgen entwickelt werden können, die anschließend in einen plattformspezifischen Anwendungscode umgesetzt werden. Ebenso ist eine Abstraktion von technischen Details der zugrundeliegenden Computerplattformen erwünscht, um sowohl eine erhöhte Systemsicherheit zu erreichen als auch eine leichte Portierung und Standardisierung von Software und insofern deren Wiederverwertbarkeit zu fördern. Insbesondere ist die automatische Erzeugung von Anwendungscode, auch im Zusammenhang mit portablen Datenträgern, wie z. B. Chipkarten, Smart Cards, Mobilfunkkarten, sicheren Multimediakarten oder dergleichen, relevant, da es sich hierbei in den meisten Fällen um hoch spezialisierte und proprietäre Plattformen handelt, für der Anwendungsentwickler ein unfangreiches Detailwissen benötigt und die zumeist nur ausgewählte Funktionen zur Verfügung stellen, beispielsweise Authentifizierungs-, Zugangs- oder Identifizierungsfunktionen oder auch Konto- und Geldkartenfunktionen.

Bei derartigen portablen Datenträgern, wie z. B. einer Chipkarte, ist es auch durchaus erwünscht, dass neben dem Hersteller insbesondere auch solche externe Anwendungsentwickler tätig werden, die keinen privilegierten Zugang zu der jeweiligen Chipkartenplattform , d.h. zu deren Betriebssystem oder Hardwarekomponenten, haben, sondern lediglich auf standardisierte Programmierschnittstellen (APIs) zugreifen können. Beispielsweise kommt es vor, dass bei einer Mobilfunkkarte, die ein bestimmter Netzbetreiber den Endkunden bereitstellt, außer dem Kartenhersteller und dem Netzbetreiber auch von diesen unabhängige Anwendungsentwickler Applikationen für die Mobilfunkkarte entwickeln und anbieten, ohne dass der Kartenhersteller, der die Plattform der Chipkarte entwickelt hat, in diesen Entwicklungsprozess involviert ist. Dazu ist es allerdings notwendig, dass die Kenntnis der Interna der Kartenplattform zur Anwendungsentwicklung nicht nötig ist und aus Gründen des Investitionsschutzes auch nicht bekannt werden können.

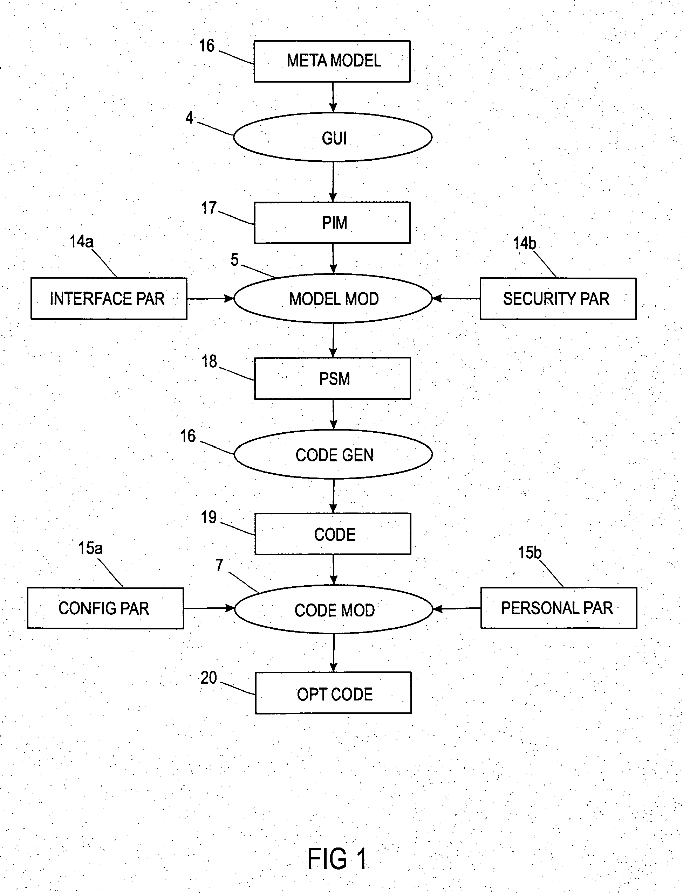

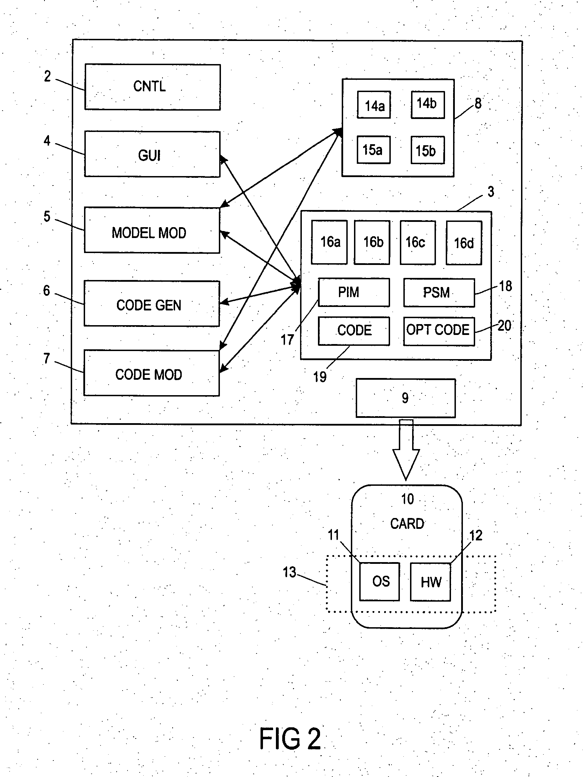

In diesem Zusammenhang gibt der MDA-Ansatz ("Model Driven Architecture") über eine Kaskade von jeweils plattformspezifischer werdenden Repräsentationen der Anwendung von einer hinreichend abstrakten Modellebene zu einer ausreichend plattformspezifischen Anwendungscodeebene einen schrittweise Entwicklungsprozess vor. Dem MDA-Ansatz folgend zeigt die Fig. 1 einen erfindungsgemäßen Verfahrensablauf einer Anwendungsentwicklung sowie in Fig. 2 eine Entwicklungsvorrichtung, die es dem Anwendungsentwickler ermöglicht, den Entwicklungsansatz für Anwendungscode komfortabel umzusetzen. Dabei kann ohne Beschränkung der Allgemeinheit davon ausgegangen werden, dass der Datenträger eine Chipkarte 10 ist, die unter dem speziellen Chipkarten-Betriebssystem "Java Card" läuft, das über seine Laufzeitumgebung (JCRE; "Java Card Runtime Environment") bzw. über die mit dieser verbundenen virtuellen Maschine als Anwendungscodeformate zumindest Java Applets bzw. Java Bytecode interpretieren kann. -

Die Entwicklungsvorrichtung 1 umfasst neben einer Steuereinheit 2 (CNTL), welche die im Folgenden genannten Komponenten 4, 5; 6, 7 bei einem geordneten Entwicklungsprozess aktiviert und ansteuert, eine graphische Benutzeroberfläche (GUI; "Graphical User Interface") 4, einen Modellmodifikator 5 (MODEL MOD), einen Codegenerator 6 (CODE GEN) und einen Codemodifikator 7 (CODE MOD). Diese Komponenten 4, 5, 6, 7 können alle als Softwarekomponenten eines herkömmlichen Personal- oder sonstigen Computers ausgestaltet sein, die von der Steuereinheit, 2 als Hauptprogramm aktiviert und von einem Prozessor (nicht dargestellt) ausgeführt werden. Die Entwicklungsvorrichtung 1 kann deshalb sowohl ein herkömmlicher Personalcomputer als auch eine spezialisierte computergestützte Entwicklungsumgebung mit weiteren in Fig. 2 nicht dargestellten Komponenten sein. Darüber hinaus umfasst die Entwicklungsvorrichtung 1 eine Parameterdatenbank 8 und einen davon verschiedenen Speicher 3 sowie eine Leseeinrichtung 9, über die die Entwicklungsvorrichtung 1 mit der Chipkarte 10 (CARD) in Interaktion treten und auf diese zugreifen kann, insbesondere um deren Zielplattform 13 zu ermitteln, die zumindest das Betriebssystem 11 (OS) und die einzelnen Hardwarekomponenten 12 (HW) umfasst.

Die in Fig. 2 gezeigte Entwicklungsvorrichtung 1 implementiert das in Fig. 1 gezeigte Entwicklungsverfahren und bildet somit ein Hilfsmittel zur Entwicklung von Anwendungen, das einem Anwendungsentwickler vorzugsweise mit Hilfe von graphischen Werkzeugen ermöglicht, ein abstraktes Anwendungsmodell der zu entwickelnden Anwendung zu erstellen, um dieses Anwendungsmodell anschließend automatisch für eine bestimmte Plattform 13, d.h. für eine bestimmte Hardware 12 und eine bestimmte Betriebssystemsoftware 11 der Chipkarte 10, automatisch in einen lauffähigen und optimierten Anwendungscode 20 zu transformieren.

Ausgangspunkt des in Fig. 1 illustrierten Entwicklungsprozesses ist eine Vielzahl von Metamodellen 16,16a-16d (META MODEL), die z.B. von dem Chipkartenhersteller vorgegeben werden und in dem Speicher 3 abgelegt sein können. Die Metamodelle 16, 16a-16d repräsentieren jeweils Prototypen für einen bestimmten Anwendungstyp, wie z.B. SIM-Toolkit-Anwendungen für Mobilfunkkarten, Börsen-/Konto-Anwendungen oder Signatur-Anwendungen, die möglichst viele Funktionen umfassen, die alle Anwendungen des betreffenden Anwendungstyps aufweisen. Optional können auch Metamodelle für einzelne Funktionen vorgegeben sein. Auf diese Weise wird einem Anwendungsentwickler eine Struktur bzw. ein Gerüst für seine Entwicklung zur Verfügung zu stellen.

Gleichzeitig bilden die Metamodelle 16,16a-16d auch eine frühzeitige Verifikation, ob eine geplante Anwendung auf einem bestimmten Plattformtyp überhaupt realisierbar ist, da in der Regel nur solche Anwendungen zu realisieren sein dürften, die sich in ein von der Entwicklungsvorrichtung 1 bereitgestelltes Metamodell 16,16a-16d, der betreffenden Plattform 13 einordnen lassen. Beispielsweise würde eine Anwendung, die darauf abzielt, einem Benutzer eines Mobilfunkendgeräts zu ermöglichen, den Kontostand bei seiner Bank zu erfragen, etwa unter ein Metamodell 16 "Banking" für die Zielplattform 13 einer Mobilfunkkarte fallen und insofern für diese Zielplattform 13 auch realisierbar sein. Die Auswahl eines entsprechenden Metamodells 16, 16a-16d, die auch von der Entwicklungsvorrichtung 1 über deren graphische Benutzeroberfläche 4 unterstützt wird, bildet insofern den Beginn des Entwicklungsprozesses.

Aus dem Metamodell 16 erstellt der Anwendungsentwickler mit Hilfe der graphischen Benutzeroberfläche 4 ein plattformunabhängiges Anwendungsmodell 17 (PIM; "Platform Independent Model"). Dieses wird erstellt, indem das ausgewählte Metamodel 16 auf der graphischen Oberfläche 4 um den logischen Ablauf des zu entwickelnden Anwendungscodes 20, beispielsweise eines Java-Applets, durch graphische Elemente z.B. in Form eines Flussdiagramms ergänzt wird. Diese Elemente legen jedoch lediglich durch Kontrollstrukturen den Programmablauf sowie abstrakte Funktionalitäten der Anwendung und deren internen Informationsfluss auf eine weitestgehend abstrakte und von der Zielplattform 13 vollständig unabhängige Art und Weise fest, ohne das bereits technische Details und plattformspezifische Kenntnisse in das plattformunabhängige Anwendungsmodell 17 einfließen. Das Metamodell 16 weist hierbei zunächst lediglich z.B. diejenigen Elemente und Relationen auf, die für den entsprechenden Anwendungstyp prototypisch sind. Das plattformunabhängige Anwendungsmodell 17 zeigt dann die Struktur und/ oder das Verhalten eines konkreten Anwendungsfalls des Metamodells 16, stellt also eine Instanz des Metamodells 16 dar.

Durch den Modellmodifikator 5 wird das plattformunabhängige Modell 17 im nächsten Schritt automatisch in ein plattformabhängiges Modell 18 (PSM; "Platform Specific Model") umgesetzt, indem in das plattformunabhängige Modell 17 Plattformtypparameter 14a,14b integriert werden, die der Modellmodifikator 5 aus der Parameterdatenbank 8 entnimmt. Die Plattformtypparameter 14a, 14b können dabei in Abhängigkeit von dem Typ der Plattform beliebige technische Details definieren, für die die Anwendung entwickelt wird, und die bereits auf Modellebene in die Anwendung integriert werden können. Dazu gehören insbesondere die Schnittstellenparameter 14a (INTERFACE PAR), die u.a. festlegen, wieviel Speicherplatz für die Anwendung zur Verfügung steht, welche Laufzeitumgebung in welcher Version vorliegt, z. B. Java Card oder .NET oder dergleichen, sowie weitere Leistungseigenschaften und Ausbaustufen des betreffenden Plattformtyps, vorhandene Bibliotheken, spezielle Funktionalitäten, wie z. B. kryptographische Funktionen, Kommunikationsschnittstellen und dergleichen mehr. Die Schnittstellenparameter 14a können z.B. auch die von der Betriebssystemsoftware 11 des Datenträgers 10 bereitgestellte Programmierschnittstellen angeben, z. B. als Java Card Laufzeitumgebung (JCRE), "Multos Executable Language" (MEL) oder .NET-CIL.

Als Plattformtypparameter 14a, 14b können auch Sicherheitsparameter 14b (SECURITY PAR) in das plattformabhängige Modell 18 integriert werden, die z.B. die allgemeine Sicherheitspolitik von Datenträgern 10 mit der vorliegenden Plattform 13 festlegen, d. h. die Sicherheitseigenschaften der Plattform 13, wie z. B. das verwendete Benutzerrechtemodell und/ oder ein Modell zur Zugangskontrolle (z. B. nach Bell-La Padula), Authentisierungsverfahren für Benutzer und Applikationen und dergleichen. Als geeignete Sicherheitspolitiken für eine Chipkarte 10, die bereits auf Modellebene eingebunden werden können, kommen beispielsweise die "Global Platform Card Specification" oder die GSM Spezifikationen 02.48 und 03.48 "Security mechanism for SIM application toolkit" infrage.

Plattformtypparameter 14a, 14b, wie z.B. die erwähnten Schnittstellenparameter 14a und Sicherheitsparameter 14b, können einerseits durch die technische Spezifikation der Plattform 13 bereits von dem Hersteller der Chipkarte 10 vorgegeben werden. In diesem Fall werden die Plattformparameter 14a, 14b zusammen mit sämtlichen Daten, Inhalten, Spezifikationen, Skripten und dergleichen in der Parameterdatenbank 8 der Entwicklungsvorrichtung 1 abgelegt, die zur korrekten Einbindung der durch die Plattformtypparameter 14a, 14b spezifizierten technischen Details in das plattformabhängige Modell 18 benötigt werden. Falls ein Plattformtypparameter 14a,14b nicht durch den Hersteller der Chipkarte 10 festgelegt wurde oder festgelegt werden muss, kann dieser auch von dem jeweiligen Anwendungsentwickler festgelegt werden, z.B. abhängig von der jeweiligen Sicherheitspolitik und in Form einer Auswahl aus mehreren möglichen Alternativen.

Durch das Einführen der Plattformtypparameter 14a, 14b in das plattformunabhängige Anwendungsmodell 17, um das plattformabhängige Anwendungsmodell 18 zu erzeugen, werden diejenigen technischen Details und Merkmale in das Anwendungsmodell integriert, die sich auf den Plattformtyp des Datenträgers 10 beziehen, also beispielsweise auf ein gemeinsames Betriebssystem 11 oder eine gemeinsame zugrundeliegende Hardware 12 aller Datenträger 10 mit der betreffenden Plattform 13.

Die verschiedenen Anweridungs.modelle,17,18 sowie die Metamodelle 16,16a-16d liegen nicht in einer herkömmlichen Programmiersprache vor, sondern werden in der Regel durch geeignete Modellierungs- oder Beschreibungssprachen, wie z. B. UML oder XML, repräsentiert, die für die Modellierung von Software und Systemen besonders geeignet sind. Derartige Sprachen definieren dabei Bezeichner für die bei der Modellierung benötigten Begriffe sowie die Relationen zwischen diesen Begriffen.

Der Codegenerator 6 generiert aus dem plattformabhängigen Anwendungsmodell 18 automatisch den Anwendungscode 19 (CODE), der zweckmäßigerweise in einem herkömmlichen Programmiersprachenformat vorliegen kann, das von der Zielplattform 13 bzw. deren Betriebssystem 11 entweder unmittelbar ausgeführt (z.B. Maschinensprache) oder interpretiert werden kann, z.B. die durch eine virtuelle Maschine interpretierten plattformunabhängigen Zwischensprachen .NET CIL oder Java-Bytecode. Das Programmiersprachenformat des Anwendungscodes 19 kann aber auch eine Quellsprache sein, für die die Zielplattform einen Übersetzer ("Compiler") bereitstellt. Die Umsetzung des plattformabhängigen Anwendungsmodells 18 in einen Anwendungscode 19 repräsentiert insofern einen weiteren technischen Konkretisierungsschritt, von einer plattformübergreifenden und eher abstrakten und problemorientierten Modellierungssprache zu dem Anwendungscode 19, der nunmehr in einem auf die Plattform 13 abgestimmten Anwendungscodeformat vorliegt.

Im letzten Schritt wird der Anwendungscode 19 durch den Codemodifikator 7 im Hinblick auf die durch die Plattformparameter 15a,15b festgelegten technischen Merkmale der Plattform 13 automatisch optimiert, um den abschließenden optimierten Anwendungscode 20 (OPT CODE) zu erzeugen und diesen an die zugrundeliegende Plattform 13 der Chipkarte 10 anzupassen. Falls der Anwendungscode 19 in einem Quellcodeformat vorliegt, kann der Optimierungsschritt in einer Übersetzung bestehen, so dass der Codemodifikator 7 dann im Wesentlichen als Übersetzer (Compiler) ausgestaltet sein kann. Die Optimierung des Anwendungscodes 19 besteht dann auch darin, eine Compiler-Optimierung im Hinblick auf eine besonders effiziente Übersetzung durchzuführen. Beispielsweise kann ein solcher Übersetzungsschritt einen Java-Quellcode in ein Java-Applet übersetzen, das den optimierten, unmittelbar ausführbaren Anwendungscode 20 darstellt. Gleiches gilt für die verschiedenen Anwendungscodeformate anderer ähnlicher Plattformen, wie z. B. Multos oder .NET. Falls der Anwendungscode 19 bereits unmittelbar ausführbar oder interpretierbar ist, führt der Codemodifikator 7 im Wesentlichen eine Optimierung im Hinblick auf die Plattformparameter 15a, 15b durch.

Die Plattformparameter 15a, 15b können u. a. Konfigurationsparameter 15a (CONFIG PAR) sowie Personalisierungsparameter 15b (PERSONAL PAR) umfassen, die der Codemodifikator 7 zur Durchführung der Optimierung aus der Parameterdatenbank 8 entnimmt. Die Konfigurationsparameter 15a umfassen beispielsweise Leistungsangaben für die spezifische Plattform 13, z. B. Einstellungen von optimalen oder erwünschten Speicherauslastungen, plattformspezifische Merkmale des jeweiligen Betriebssystems 11 und dergleichen, oder, sofern ein Multitasking-System vorliegt, Angaben zur Prioritätsverwaltung, zur Ressourcenverwaltung, zur Speicheraufteilung sowie zu Möglichkeiten der Leistungsoptimierung. Insbesondere umfassen die Konfigurationsparameter 15a Implementierungsdetails des Betriebssystems 11, auf die ein Anwendungsentwickler in der Regel keinen Zugriff hat, sondern die er bei der Anwendungsentwicklung als Nebenbedingungen akzeptieren muss.

Daneben existieren die Personalisierungsparameter 15b, sofern es sich bei dem Datenträger 10.um einen personalisierbaren Datenträger handelt, wie z. B. Konto- oder Geldkarten oder dergleichen. Solche Personalisierungsparameter 15a können Personalisierungsdaten wie z. B. persönliche Dateien und kryptographische Schlüssel des zukünftigen Besitzers des Datenträgers 10 umfassen, aber auch Informationen zu der zur Initialisierung einer Chipkarte 10 angelegten Datenstruktur. Insgesamt repräsentieren die Plattformparameter 15a,15b solche Angaben, Bedingungen und technische Sachverhalte der Plattform 13, die unmittelbar die technische Ausgestaltung der Plattform 13 bzw. auch des einzelnen individuellen Datenträgers 10 betreffen.

Sowohl bei den Plattformtypparametern 14a,14b als auch bei den Plattformparameter 15a,15b ist es der Regelfall, dass sie direkt vom Hersteller des Datenträgers 10 oder zumindest von dessen Herausgeber an den Endkunden, z.B. einer Bank oder einem Mobilfunknetzbetreiber, festgelegt werden und als solche in der Parameterdatenbank 8 abrufbar bereitliegen. Andererseits ist es bei bestimmten plattformspezifischen Angaben jedoch auch möglich, dass diese erst durch den Anwendungsentwickler im Rahmen des beschriebenen Entwicklungsprozesses festgelegt werden können. Hierfür kann die Entwicklungsvorrichtung 1 eine Eingabeeinrichtung (nicht dargestellt) umfassen, über die der Anwendungsentwickler die Angaben während des Entwicklungsprozesses individuell eingeben kann.

In jedem Falle ist die Plattform 13 als Grundlage des sich schrittweise konkretisierenden Entwicklungsprozesses direkt über eine entsprechende Leseschnittstelle 9 aus der Chipkarte 10 auslesbar. Die Leseschnittstelle 9 kann z.B. ein Chipkartenleser sein, der die relevanten Betriebssystem-11 und Hardwareangaben 12 der Plattform 13 ausliest. Durch das Auslesen der Zielplattform aus der Chipkarte 10 durch die Leseeinrichtung 9 bekommt die Entwicklungsvorrichtung 1 einerseits Informationen über die konkrete Hardwareausstattung 12 der Chipkarte 10, z.B. Speicherplatz, Prozessortyp, vorhandene Schnittstellen und dergleichen, und andererseits über das auf der Chipkarte 10 vorhandene Betriebssystem, z. B. Java Card 2.0, Java Card 2.1, Multos oder dergleichen.

Diese Informationen fließen dann einerseits in die Auswahl möglicher Metamodelle 16, 16a-16d ein, da von der Plattform 13 auch die von der Chipkarte 10 potentiell realisierbaren und von den Metamodellen 16,16a-16d vorgegebenen Anwendungstypen abhängen. Andererseits können die ausgelesenen Angaben zur Zielplattform 13 dann - z.B. von der Steuereinrichtung 2 - genutzt werden, um eine Vorauswahl oder Einschränkungen der Plattformtypparameter 14a, 14b und der Plattformparameter 15a, 15b zu treffen, die sich auf den ermittelten Plattformtyp beziehen. Die Plattforminformation beeinflusst somit insbesondere auch die von dem Modellmodifikator 5 und dem Codemodifikator 7 berücksichtigten Plattformtypparameter 14a, 14b und Plattformparameter 15a, 15b, da diese auf die jeweils vorliegende Plattform 13 genau abgestimmt sind.

Die bisherigen Ausführungsformen wurden bezogen auf die Erzeugung von optimiertem Anwendungscode einer Anwendung beschrieben. Analog können aber auch optimierte Anwendungsdaten erzeugt werden. In der Regel werden die optimierten Anwendungsdaten zusammen mit dem optimierten Anwendungscode erzeugt. Es ist aber auch möglich als Ergebnis eines Prozesses nur optimierte Anwendungsdaten zu erzeugen. Diese Anwendungsdaten können für eine Personalisierung oder Initialisierung der Chipkarte verwendet werden.

Die Produktionsparameter (15b) können hierfür insbesondere folgende Informationen beinhalten:
- Personenbezogene Daten, die eine Generierung personenbezogener, kryptographischer Schlüssel und Zertifikate, steuern. Diese Informationen sind dann im erzeugten Code (20) eingebunden.
- Access Conditions, die im Metamodell (16) allgemein festgehalten sind und mit Hilfe spezifischer Produktionsparameter (15b) im Code (20) konkret auf eine Plattform z.B. das spezifische Filesystem abgebildet sind.
- Spezielle grafische Informationen wie GIF- oder JPEG-Dateien, die ein WebServer (SCWS) auf der Chipkarte darstellen kann, und die im Meta-Modell (16) nur als Verweis referenziert werden.
- Profildaten und Dateistruktur welche auf die Chipkarte aufgebracht werden sollte.

Somit kann die Erfindung auch zum Design des Produktionsprozesses einer Chipkarte verwendet werden. Da hier flexibel auf verschiedenste Anforderungen reagiert werden muss, kann der softwaretechnische Herstellungsprozess über den Erfindungsgegenstand flexibel in UML definiert werden. In den einzelnen Schritten des Prozesses (OS, Completion, Initialisierung, Applikationen und individuellen Daten) werden Produktionsparameter (14a, 14b, 15a, 15b) eingelesen und über entsprechende über ein UML-Meta-Modell gesteuerte Skipts verarbeitet. Durch die Anordnung dieser Skripts wird der Prozess zur Produktion der Karte nach Kundenwunsch definiert. Der Erfindungsgegenstand kann bei diesen Produktionsprozessen auch auf Karten mit Magnetstreifen und Speicherkarten erweitert werden. Eine eigene Prozessumgebung auf der Chipkarte ist nicht unbedingt erforderlich, wenn über die beschriebenen Prozesse ausschließlich Daten bereitgestellt werden.

## Patentansprüche

1. Verfahren zum Erzeugen von optimiertem auf einer Zielplattform (13) von portablen Datenträgern (10) lauffähigen Anwendungscode (20) und/oder Anwendungsdaten einer Anwendung, umfassend die Schritte:
- Erstellen eines von der Zielplattform (13) unabhängigen plattformunabhängigen Anwendungsmodells (17) der Anwendung;
- Erzeugen eines an die Zielplattform (13) angepassten plattformspezifischen Anwendungsmodells (18) der Anwendung basierend auf dem plattformunabhängigen Anwendungsmodell (17); und
- Erzeugen von Anwendungscode (19) und/ oder Anwendungsdaten basierend auf dem plattformabhängigen Anwendungsmodell (18);
**dadurch gekennzeichnet, dass**
- das plattformspezifische Anwendungsmodell (18) abhängig von zumindest einem auf den Typ der Zielplattform (13) abgestimmten Plattformtypparameter (14a, 14b) erzeugt wird; und dass
- der erzeugte Anwendungscode (19) und/ oder die erzeugten Anwendungsdaten in einem weiteren Schritt abhängig von zumindest einem auf die Zielplattform (13) abgestimmten Plattformparameter (15a,15b) optimiert werden.

2. Verfahren nach Anspruch 1, **gekennzeichnet durch** die Schritte:
- Bereitstellen von Metamodellen (16; 16a-16d), die jeweils Anwendungstypen von verschiedenen für die Zielplattform (13) geeigneten Anwendungen repräsentieren; und
- Erstellen des plattformunabhängigen Anwendungsmodells (17) basierend auf demjenigen Metamodel (16; 16a-16d), das den Anwendungstyp der Anwendung repräsentiert.

3. Verfahren nach Anspruch 1 oder 2, **dadurch gekennzeichnet, dass** das plattformabhängige Anwendungsmodell (18) abhängig von Sicherheitsparametern (14b), die Sicherheitseigenschaften der Zielplattform (13) betreffen, und/oder von Schnittstellenparametern (14a), die Programmierschnittstellen eines Betriebssystems (11) der Zielplattform (13) betreffen, als Plattformtypparameter (14a, 14b) erzeugt wird.

4. Verfahren nach Anspruch 3, **dadurch gekennzeichnet, dass** bei der Erzeugung des plattformabhängigen Anwendungsmodells (18) als Schnittstellenparameter (14a) ein zur Verfügung stehender Speicherplatz, eine Laufzeitumgebung, Bibliotheken, Kommunikationsschnittstellen und/ oder Leistungseigenschaften der Zielplattform (13) verwendet werden.

5. Verfahren nach Anspruch 3 oder 4, **dadurch gekennzeichnet, dass** bei der Erzeugung des plattformspezifischen Anwendungsmodells (18) als Sicherheitsparameter (14b) eine Rechteverwaltung und/ oder Authentisierungsverfahren verwendet werden.

6. Verfahren nach einem der Ansprüche 3 bis 5, **dadurch gekennzeichnet, dass** die Plattformtypparameter (14a, 14b) abhängig von dem Typ der Plattform (13), für die der Anwendungscode (19, 20) und/ oder die Anwendungsdaten erzeugt werden, vorgegeben sind und einer Parameterdatenbank (8) entnommen werden.

7. Verfahren nach einem der Ansprüche 1 bis 6, **dadurch gekennzeichnet, dass** der Anwendungscode (19) und/ oder die Anwendunsgdaten abhängig von Konfigurationsparametern (15a), die die Implementierung eines Betriebssystems (11) der Zielplattform (13) betreffen, und/oder Personalisierungsparametern (15b), die eine Personalisierung des Datenträgers (10) auf einen Benutzer betreffen, als Plattformparameter (15a, 15b) optimiert wird.

8. Verfahren nach Anspruch 7, **dadurch gekennzeichnet, dass** bei der Optimierung des Anwendungscodes (19) als Konfigurationsparameter (15a) eine Prioritätenstrategie, eine Ressourcenverwaltungsstrategie und/oder eine Speicherorganisation des Betriebssystems (11) der Zielplattform (13) verwendet werden.

9. Verfahren nach Anspruch 7 oder 8, **dadurch gekennzeichnet, dass** bei der Optimierung des Anwendungscodes (19) und/ oder der Anwendungsdaten als Personalisierungsparameter (15b) Initialisierungsdaten und/ oder personenbezogene Daten des Benutzers des Datenträgers (10) verwendet werden.

10. Verfahren nach einem der Ansprüche 7 bis 9, **dadurch gekennzeichnet, dass** von den Plattformparametern (15a, 15b) zumindest die Konfigurationsparameter (15a) abhängig von dem Betriebssystem (11) der Plattform (13) vorgegeben sind und einer Parameterdatenbank (8) entnommen werden.

11. Verfahren nach einem der Ansprüche 1 bis 10, **dadurch gekennzeichnet, dass** die Zielplattform (13) des Datenträgers (10) durch Abfragen des Datenträgers (10) ermittelt wird.

12. Verfahren nach einem der Ansprüche 1 bis 11, **dadurch gekennzeichnet, dass** der Anwendungscode (19, 20) für eine Zielplattform (13) erzeugt wird, die als Betriebssystem (11) Java Card, Multos, .Net, ein natives System oder ein Multitasking-System umfasst und/ oder die auf einer Chipkarte, Smart Card, Mobilfunkkarte, USB-Token oder sicheren Multimediakarte als Datenträger (10) basiert.

13. Verfahren nach einem der Ansprüche 1 bis 12, **dadurch gekennzeichnet, dass** der Anwendungscode (19) in einem unmittelbar ausführbaren oder interpretierbaren Codeformat, insbesondere als Java-Servlet/Applet, Java-Bytecode, native Code, Multos-MEL-Code oder Net-CIL-Code, oder als zu übersetzender Quellcode erzeugt wird.

14. Verfahren nach Anspruch 13, **dadurch gekennzeichnet, dass** beim Schritt des Optimierens der in einem unmittelbar ausführbaren oder interpretierbaren Codeformat vorliegende Anwendungscode (19) optimiert wird oder dass der in einem zu übersetzenden Quellcodeformat vorliegende Anwendungscode (19) in ein unmittelbar ausführbares oder interpretierbares Anwendungscodeformat übersetzt wird, insbesondere in Java-Bytecode, native Code, Multos MEL-Code, Net-CIL-Code oder als Java-Applet.

15. Verfahren nach einem der Ansprüche 1 bis 14, **dadurch gekennzeichnet, dass** das plattformunabhängige Anwendungsmodell (17) und/oder das plattformunabhängige Anwendungsmodell (18) in UML oder XML erzeugt wird.

16. Vorrichtung (1) zum Erzeugen von optimiertem auf einer Zielplattform (13) von portablen Datenträgern (10) lauffähigen Anwendungscode (19, 20) und/oder Anwendungsdaten einer Anwendung, umfassend zumindest einen Speicher (3, 8) sowie
- einen Modellmodifikator (5), der eingerichtet ist, ein an die Zielplattform (13) angepasstes plattformabhängiges Anwendungsmodell (18) der Anwendung basierend auf einem in dem zumindest einen Speicher (3) vorliegenden, von der Zielplattform (13) unabhängigen plattformunabhängigen Anwendungsmodell (17) der Anwendung zur erzeugen; und
- einen Anwendungsgenerator (7), der eingerichtet ist, Anwendungscode (19) und/ oder Anwendungsdaten basierend auf dem plattformabhängigen Anwendungsmodell (18) zu erzeugen;
**gekennzeichnet durch**
- einen Änwendungsmodifikator (7), der eingerichtet ist, den erzeugten Anwendungscode (19) und/ oder die erzeugten Anwendungsdaten abhängig von zumindest einem in dem zumindest einem Speicher (8) vorliegenden, auf die Zielplattform (13) abgestimmten Plattformparameter (15a, 15b) zu optimieren; und **dadurch**, dass
- der Modellmodifikator (5) eingerichtet ist, das plattformabhängige Anwendungsmodell (18) abhängig von zumindest einem in dem zumindest einen Speicher (8) vorliegenden, auf den Typ der Zielplattform (13) abgestimmten Plattformtypparameter (14a, 14b) zu erzeugen.

17. Vorrichtung (1) nach Anspruch 16, **gekennzeichnet durch** eine Vielzahl von in dem zumindest einen Speicher (3) vorliegenden Metamodellen (16; 16a-16b), die jeweils Anwendungstypen von verschiedenen für die Zielplattform (13) geeigneten Anwendungen repräsentieren, und eine Benutzerschnittstelle (4), die es ermöglicht, dasjenige Metamodel (16; 16a-16b) aus der Vielzahl von Metamodellen (16; 16a-16d) auszuwählen, das den Anwendungstyp der Anwendung repräsentiert, um auf dessen Basis das plattformunabhängige Anwendungsmodell (17) zu erstellen.

18. Vorrichtung (1) nach Anspruch 16 oder 17, **dadurch gekennzeichnet, dass** der Modellmodifikator (5) eingerichtet ist, das plattformabhängige Anwendungsmodell (18) abhängig von Plattformtypparametern (14a, 14b) zu erzeugen, die Sicherheitsparameter (14b) und/ oder Schnittstellenparameter (14a) umfassen, wobei die Sicherheitsparameter (14b) Sicherheitseigenschaften der Zielplattform (13) betreffen und die Schnittstellenparameter (14a) Programmierschnittstellen eines Betriebssystems (11) der Zielplattform (13) betreffen.

19. Vorrichtung (1) nach Anspruch 18, **dadurch gekennzeichnet, dass** der Modellmodifikator (5) eingerichtet ist, das plattformabhängige Anwendungsmodell (18) abhängig von Schnittstellenparametern (14a) zu erzeugen, die einen zur Verfügung stehenden Speicherplatz, eine Laufzeitumgebung, Bibliotheken, Kommunikationsschnittstellen und/ oder Leistungseigenschaften der Zielplattform (13) wiedergeben.

20. Vorrichtung (1) nach Anspruch 18 oder 19, **dadurch gekennzeichnet, dass** der Modellmodifikator (5) eingerichtet ist, das plattformabhängige Anwendungsmodell (18) abhängig von Sicherheitsparametern (14b) zu erzeugen, die eine Rechteverwaltung und/ oder Authentisierungsverfahren wiedergeben.

21. Vorrichtung (1) nach einem der Ansprüche 18 bis 20, **dadurch gekennzeichnet, dass** der zumindest eine Speicher (3, 8) eine Parameterdatenbank (8) umfasst, die Plattformtypparameter (14a, 14b) für verschiedene Plattformtypen umfasst, und **dadurch**, dass der Modellmodifikator (5) die Plattformtypparameter (14a, 14b) aus der Parameterdatenbank (8) ausließt, die der Plattform (13) des Datenträgers (10) entsprechen.

22. Vorrichtung (1) nach einem der Ansprüche 16 bis 21, **dadurch gekennzeichnet, dass** der Codemodifikator (7) eingerichtet ist, den Anwendungscode (19) abhängig von Plattformparametern (15a, 15b) zu optimieren, die Konfigurationsparameter (15a) und/oder Personalisierungsparameter (15b) umfassen, wobei die Konfigurationsparameter (15a) die Implementierung eines Betriebssystems (11) der Zielplattform (13) betreffen und die Personalisierungsparameter (15b) eine Personalisierung des Datenträgers (10) auf einen Benutzer betreffen.

23. Vorrichtung (1) nach Anspruch 22, **dadurch gekennzeichnet, dass** der Codemodifikator (7) eingerichtet ist, den Anwendungscode (19) abhängig von Konfigurationsparametern (15a) zu optimieren, die eine Prioritätenstrategie, eine Ressourcenverwaltungsstrategie und/oder eine Speicherorganisation des Betriebssystems (11) der Zielplattform (13) wiedergeben.

24. Vorrichtung (1) nach Anspruch 22 oder 23, **dadurch gekennzeichnet, dass** der Codemodifikator (7) eingerichtet ist, den Anwendungscode (19) abhängig von Personalisierungsparametern (15b) zu optimieren, die Initialisierungsdaten und/ oder personenbezogene Daten des Benutzers des Datenträgers (10) betreffen.

25. Vorrichtung (1) nach einem der Ansprüche 22 bis 24, **dadurch gekennzeichnet, dass** der zumindest eine Speicher (3, 8) eine Parameterdatenbank (8) ist, die Konfigurationsparameter (15a) für verschiedene Betriebssysteme (11) von Plattformen (13) umfasst, und **dadurch**, dass der Codemodifikator (7) die Konfigurationsparameter (15a) aus der Parameterdatenbank (8) ausließt, die dem Betriebssystem (11) des Datenträgers (10) entsprechen.

26. Vorrichtung (1) nach einem der Ansprüche 16 bis 25, **gekennzeichnet durch** eine Leseeinrichtung (9), die eingerichtet ist, die Zielplattform (13) des Datenträgers (10) zu ermitteln.

27. Vorrichtung (1) nach einem der Ansprüche 16 bis 26, **dadurch gekennzeichnet, dass** die Vorrichtung (1) eingerichtet ist, den Anwendungscode (19, 20) für eine Zielplattform (13) zu erzeugen, die als Betriebssystem (11) Java Card, Multos, .Net, ein natives System oder ein Multitasking-System umfasst und/ oder die auf einer Chipkarte, Smart Card, Mobilfunkkarte, Krypto-Token oder sicheren Multimediakarte als Datenträger (10) basiert.

28. Vorrichtung (1) nach einem der Ansprüche 16 bis 27, **dadurch gekennzeichnet, dass** der Codegenerator (6) den Anwendungscode (19) in einem unmittelbar ausführbaren oder interpretierbaren Codeformat erzeugt, insbesondere in Java-Bytecode, native Code, Multos-MEL-Code, .Net-CIL-Code oder als Java-Servlet/ Applet, oder als zu übersetzenden Quellcode erzeugt.

29. Vorrichtung (1) nach Anspruch 28, **dadurch gekennzeichnet, dass** der Codemodifikator (7) einen in einem unmittelbar ausführbaren oder interpretierbaren Codeformat vorliegenden Anwendungscode (19) optimiert oder einen in einem zu übersetzenden Quellcode vorliegenden Anwendungscode (19) in ein unmittelbar ausführbares oder interpretierbares Codeformat übersetzt, insbesondere in Java-Bytecode, native Code, Multos MEL-Code, .Net-CIL-Code oder als Java-Servlet/ Applet.

30. Vorrichtung (1) nach einem der Ansprüche 16 bis 29, **dadurch gekennzeichnet, dass** die Benutzeroberfläche (4) eingerichtet ist, das plattformunabhängige Anwendungsmodell (17) in UML oder XML in dem zumindest einen Speicher (3) abzuspeichern, und/oder dass der Modellmodifikator (5) eingerichtet ist, das plattformunabhängige Anwendungsmodell (17) in UML oder XML aus dem zumindest einen Speicher (3) auszulesen und/ oder das plattformabhängige Anwendungsmodell (17) in UML oder XML in dem zumindest einen Speicher (3) abzuspeichern.
